Europäisches Patentamt

(19) European Patent Office

Office européen des brevets

(11) Publication number: **0 107 853**
**A2**

(12) # EUROPEAN PATENT APPLICATION

(21) Application number: **83110647.1**

(22) Date of filing: **25.10.83**

(51) Int. Cl.³: **G 11 B 5/54**
**G 11 B 5/40**

(30) Priority: **29.10.82 JP 190314/82**

(43) Date of publication of application:
**09.05.84 Bulletin 84/19**

(84) Designated Contracting States:
**DE FR GB IT**

(71) Applicant: **TOKYO SHIBAURA DENKI KABUSHIKI
KAISHA
72, Horikawa-cho Saiwai-ku
Kawasaki-shi Kanagawa-ken 210(JP)**

(72) Inventor: **Shimanuki, Machio
6-406, Toshiba Oume Ryo 2016, Shin-Machi
Oume-Shi Tokyo-to(JP)**

(74) Representative: **Patentanwälte Dipl.-Ing. Klaus Behn
Dipl.-Phys. Robert Münzhuber
Widenmayerstrasse 6/IV
D-8000 München 22(DE)**

(54) **Magnetic disk drive apparatus.**

(57) A magnetic disk drive apparatus provided with a protecting cover covering the same generally comprises a base, magnetic disks mounted on a rotary shaft rotatably attached to the base, and an actuator movably attached to the base. To one end of the actuator are rotatably attached suspensions which are provided with magnetic heads at the free ends thereof respectively. The magnetic disk drive apparatus further comprises a shaft rotatably supported by the protecting cover and vertically extending through an upper surface of the cover and a stop member secured to a lower portion of the shaft inside the cover for restricting the movement of the actuator at a locking position thereof. The shaft is also connected to an operating mechanism so that the stop member will take a locking or unlocking position for the actuator.

FIG. I

# MAGNETIC DISK DRIVE APPARATUS

## BACKGROUND OF THE INVENTION

This invention relates to a magnetic disk drive apparatus, and more particularly to an actuator locking mechanism of so-called Winchester type fixed magnetic disk drive apparatus adapted to lock an actuator of the magnetic disk drive apparatus on the front side thereof.

There has been well known a magnetic disk drive apparatus in which magnetic heads are movably held on magnetic disks rotating at a high speed to memorize information thereon. In the Winchester type magnetic disk drive apparatus, a disk support rotary shaft is rotatably mounted on a horizontal base of the apparatus and a plurality of magnetic disks are horizontally supported with spaces therebetween. An actuator is also supported on the base to be movable and the actuator generally comprises a carriage which is movably supported on the base through a shaft, a coil assembly attached to one end of the carriage and an access arm attached to the other end of the carriage. The access arm usually comprises a plurality of plate members, and a plurality of suspensions are movably attached to the free ends of the access arm plate members at the upper and lower surfaces of the respective arm plate members so that paired two suspensions can hold one disk therebetween. The respective suspensions are provided with magnetic heads on their front ends so that paired two magnetic heads provided on the paired two suspensions hold one magnetic disk therebetween in a manner that the paired magnetic heads contact the upper and lower surfaces of the magnetic disk when the disk stops and release the contact when the disk is rotated, such system being called "contact-start-stop system".

When the magnetic disk drive apparatus is to be moved or shifted, in order to protect the actuator and the magnetic disks from being damaged, the actuator should be fixed so as not to easily move or swing. To prevent such undesired movement or swinging of the actuator, a locking mechanism, for example a screw type lock member, is usually disposed on the base near the actuator to fix it with a driver. Although locking operation of the locking mechanism of the type described above can be done relatively easily when the magnetic disk drive apparatus is not assembled in any system, it will be difficult to loosen the screw from the outside of the system once the apparatus has been assembled in some system. In order to unlock the locking of the screw, it will be necessary to forwardly draw out the apparatus from a casing of the system and to release the locking in a manner reverse to that described above after the system has been moved or shifted for operating the magnetic disk drive apparatus. This requires troublesome works.

## SUMMARY OF THE INVENTION

It is an object of this invention to provide an actuator locking mechanism of a magnetic disk drive apparatus assembled in a certain system, for example, in which the actuator can be locked or unlocked as the apparatus is assembled in the system.

According to this invention there is provided a magnetic disk drive apparatus provided with a protecting cover covering the same comprising a horizontal base, magnetic disks mounted on a rotary shaft rotatably attached to the base, an actuator movably attached to the base, and suspensions rotatably pivoted to one end of the actuator and provided with magnetic heads at the free ends of the suspensions respectively. The apparatus further comprises a shaft rotatably supported by the protecting cover and vertically extending through an upper surface of the protecting cover, a stop member secured to a lower portion of the shaft inside the

3

protecting cover for restricting the movement of the actuator at a locking position thereof, and an operating mechanism operatively connected to the shaft so that the stop member will take a locking or unlocking position for the actuator.

## BRIEF DESCRIPTION OF THE DRAWINGS

In the accompanying drawings:

FIG. 1 is a plan view, partly broken away, of a magnetic disk drive apparatus provided with an actuator locking mechanism according to this invention under a locked condition;

FIG. 2 is a cross sectional side view taken along the line II-II shown in FIG. 1; and

FIG. 3 is a plan view, partly broken away, of the magnetic disk drive apparatus shown in FIG. 1 under an actuator unlocking condition.

## DESCRIPTION OF THE PREFERRED EMBODIMENT

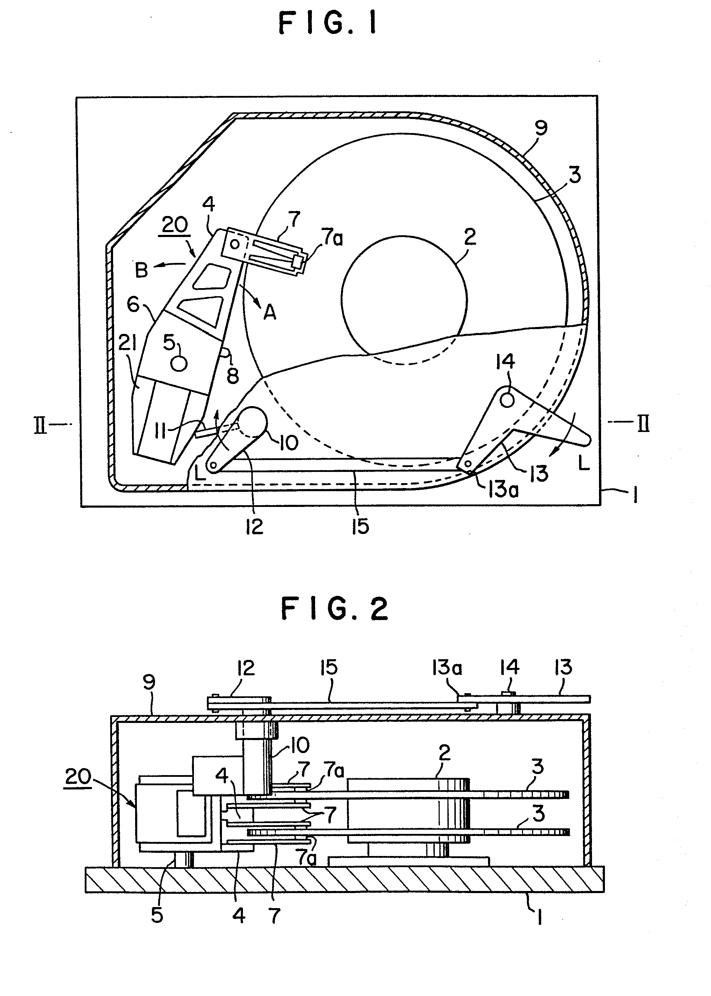

Referring to FIGS. 1 and 2 which show a plan view and a side view of a magnetic disk drive apparatus according to this invention, a rotary shaft 2, which is driven by an electric motor, not shown, is rotatably mounted on a horizontal base 1 of a magnetic disk drive apparatus. A plurality of magnetic disks 3 are horizontally held with spaces therebetween on the rotary shaft 2 so as to be rotatable therewith. Although in the illustrated embodiment, two magnetic disks are shown for convenience sake, more than two magentic disks may of course be used.

On the base 1 is also movably attached an actuator 20 which generally comprises a carriage 6 mounted to be swingable about a pivot 5 secured to the upper surface of the base 1, an electromagnetic coil assembly 21 secured to one end of the carriage 6, and an access arm 4 secured to the other end of the carriage 6. The access arm 4 comprises a plurality of flat plate arm members and to the free ends of the arm members are rotatably attached one ends of suspensions 7 so that paired two arm members hold one magnetic disk therebetween.
The suspension 7 are provided with magnetic heads 7a
respectively on the inner surfaces of their free ends
so that paired two magnetic heads provided on the paired two suspensions 7 hold one magnetic disk therebetween in a manner that the paired magnetic heads 7a
contact to the upper and lower surfaces of the magnetic
disk 3 when the disk is not rotated and release the
contact when the disk is rotated.

The actuator 20 can be swung in directions A and B
shown by arrows in FIG. 1 about the pivot 5 and the
maximum swinging in the direction A can be limited by a
stop pin 8 secured to the base 1 at a portion above the
pivot 5 as viewed in FIG. 1. The actuator 20 and the
magnetic disks 3 are covered by a cover 9 with its lower
end fixed to the base 1.

According to this invention, a locking shaft member
10 having an axis aligned with the vertical axis of the
disk support rotary shaft 2 is pivotably supported by
the upper surface of the cover 9 so that the upper end of
the shaft 10 projects beyond the upper surface of the
cover 9 and the lower end thereof extends into the cover
9. A stop member 11 in the form of a plate is secured to
the lower portion of the locking shaft 10 and has a radial
length enough to engage at its front end with the side
of the actuator 20 at an actuator locking position.

A locking arm member 12 is secured to the upper portion of the locking shaft 10 above the cover 9.

On another portion of the upper surface of the cover
9 is located a bell-crank shaped operating lever 13
through a pivot 14 secured to the cover 9 to be rotatable
thereabout and the free end of the locking arm 12 is
operatively connected to one end 13a of the bell-crank
shaped lever 13 through a link member 15.

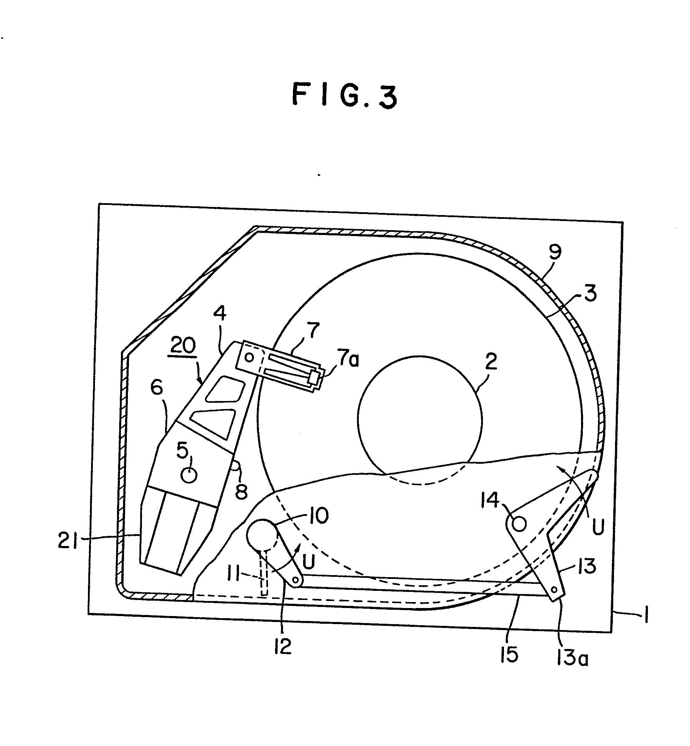

The operation of the actuator locking mechanism of
the magnetic disk drive apparatus according to this invention will be described hereinbelow in conjunction with FIGS. 1 and 3.

FIG. 3 shows the magnetic disk drive apparatus in operative condition in which the actuator 20 is in an unlocked condition. That is, the operating lever 13 takes an unlocked position U in which the operating lever 13 has been rotated counterclockwisely as shown by an arrow so that the link member 15 is pulled rightwardly as viewed in FIG. 3 to rotate the locking arm 12 to an unlocked position U, whereby the stop member 11 does not engage with the actuator 20. Under these conditions, the actuator 20 can be freely operated to memorize information or data with the magnetic head 7a.

In a case where it is required to move or convey the magnetic disk drive apparatus, the actuator 20 is locked by rotating the operating lever 13 clockwisely about the pivot 14 so as to take a locking position L as shown in FIG. 1. At this time, the link member 15 is shifted leftwardly thereby to rotate the locking arm 12 clockwisely to also take a locking position L, thus causing the front end of the stop member 11 to engage with the side surface of the actuator 20 to prevent the counterclockwise rotation thereof. Under this state, since the side of the actuator 20 also engages with the stop pin 8, the clockwise rotation of the actuator can be limited, whereby the swinging movement of the actuator 20 can be prevented even if a shock or vibration is imparted to the magnetic disk drive apparatus during the conveyance thereof. Thus, the magnetic heads as well as the magnetic disks can be prevented from being damaged during the conveyance.

Although in the foregoings, an embodiment regarding a magnetic disk drive apparatus provided with a pivotable actuator was described, this invention can also be applied to the magnetic disk drive apparatus provided with a linearly moving type actuator.

6

CLAIMS:

1.     A magnetic disk drive apparatus provided with a protecting cover covering the same of the type comprising  a horizontal base, magnetic disks mounted on a rotary shaft rotatably attached to said base, an actuator movably attached to said base, and suspensions rotatably pivoted to one end of said actuator and provided with magnetic heads at the free ends of said head holders respectively, characterized in that a shaft is rotatably supported by said protecting cover and vertically extends through the upper surface of said protecting cover, a stop member is secured to the lower portion of said shaft inside said protecting cover for restricting the movement of said actuator at a locking position thereof, and an operating mechanism is operatively connected to said shaft so that said stop member will take a locking or unlocking position for said actuator.

2.     The magnetic disk drive apparatus according to claim 1 wherein said operating mechanism comprises a locking arm member secured to the upper end of said shaft on the outside of said protecting cover to be rotatable with said shaft and a lever member pivotably attached to the upper surface of said protecting cover and operatively connected to said locking arm member through a link member.

3.     The megnetic disk drive apparatus according to claim 2 wherein said lever member comprises a bell crank-shaped arm member.

# FIG. 1

# FIG. 2

# F I G. 3